# FASCICULE DE BREVET EUROPEEN

(11) **EP 3 627 210 B1**
(45) Date de publication et mention de la délivrance du brevet: **26.10.2022**
(21) Numéro de dépôt: 19198885.6
(22) Date de dépôt: 23.09.2019
(51) Int. Cl.: G02B 27/01

(54) **SYSTÈME DE VISION EN RÉALITÉ VIRTUELLE OU AUGMENTÉE AVEC CAPTEUR D'IMAGE DE L'OEIL, ET PROCÉDÉ ASSOCIÉ**
VIRTUAL-REALITY- ODER AUGMENTED-REALITY-SICHTSYSTEM MIT BILDSENSOR DES AUGES, UND ENTSPRECHENDES VERFAHREN
SYSTEM FOR VIEWING IN VIRTUAL OR AUGMENTED REALITY WITH EYE IMAGE SENSOR, AND ASSOCIATED METHOD

(30) Priorité: 24.09.2018 FR 1858660
(43) Date de publication de la demande: 25.03.2020
(73) Titulaire: Commissariat à l'énergie atomique et aux énergies alternatives, 75015 Paris (FR)
(72) Inventeur: MAINGUET, Jean-François, 38054 GRENOBLE CEDEX 09 (FR)
(74) Mandataire: Brevalex

(56) Documents cités:
- US-A1- 2013 241 907
- US-A1- 2014 145 939
- US-A1- 2014 351 896
- US-A1- 2017 177 075
- US-A1- 2018 239 145
- DAMIEN ROMPAPAS ET AL: "EyeAR: Refocusable Augmented Reality Content through Eye Measurements", MULTIMODAL TECHNOLOGIES AND INTERACTION, vol. 1, no. 4, 26 septembre 2017 (2017-09-26), page 22, XP055599495, DOI: 10.3390/mti1040022

## Description

### DOMAINE TECHNIQUE

La réalité virtuelle désigne une technologie qui place un utilisateur dans un environnement artificiellement généré et dans lequel l'utilisateur peut interagir à l'aide de logiciels.

La réalité augmentée désigne une technologie qui superpose la réalité et des éléments d'affichage générés par des logiciels.

L'invention concerne le domaine des systèmes de vision en réalité virtuelle ou en réalité augmentée, comprenant un support de type lunette, masque ou casque destiné à être monté sur la tête d'un utilisateur.

### ÉTAT DE LA TECHNIQUE ANTÉRIEURE

On connaît dans l'art antérieur des systèmes de vision en réalité virtuelle comprenant un masque muni de deux écrans d'affichage situés chacun en face d'un œil, en utilisation. Chaque écran est placé dans le plan focal d'un système optique de projection respectif, de manière à projeter une image à l'infini qui peut être vue par l'utilisateur sans effort d'accommodation.

Un système de vision en réalité virtuelle est généralement muni de capteurs, pour détecter les mouvements et/ou l'orientation de la tête, ce qui permet d'adapter en temps réel l'image vue par l'utilisateur afin de produire l'illusion d'une immersion dans l'environnement généré artificiellement.

Le système de vision en réalité virtuelle peut embarquer un processeur qui exécute localement des applications de réalité virtuelle et gère l'affichage vidéo sur les deux écrans d'affichage. En variante, le système de vision en réalité virtuelle est relié à un processeur externe, par une liaison filaire ou sans fil.

On connaît par exemple le système de vision en réalité virtuelle Oculus Rift, qui se présente sous la forme d'un masque solidaire d'une sangle. Le masque est destiné à être appliqué devant les yeux, en occultant la lumière extérieure. Il reçoit non pas deux écrans individuels, mais un unique écran plat qui en utilisation recouvre les deux yeux et affiche deux images individuelles juxtaposées. Deux lentilles sont configurées pour projeter chacune l'une de ces images individuelles.

On connaît également des systèmes de vision en réalité augmentée de type « affichage tête haute », ou lunettes intelligentes. Dans un tel système, les écrans d'affichage sont déportés hors du champ de vision de l'utilisateur. Des systèmes optiques à base de lames semi-réfléchissantes permettent de projeter des images jusque dans le champ de vision de l'utilisateur, tout en laissant passer la lumière extérieure. Il est ainsi possible de fournir à l'utilisateur des informations visuelles qui viennent se superposer à la vision de son environnement réel.

On peut citer également, parmi les documents connus de l'art antérieur, les documents suivants :
- US 2017/177075, qui décrit un dispositif d'affichage dans lequel une matrice d'émetteurs lumineux et une matrice de photo-détecteurs sont entrelacées entre elles ;
- US 2014/145939, qui décrit également un dispositif d'affichage dans lequel une matrice d'émetteurs lumineux et une matrice de photo-détecteurs sont entrelacées entre elles ;
- US 2013/241907, qui décrit des lunettes de vision en réalité augmentée avec une matrice d'affichage et une matrice de photo-détecteurs formées sur un même substrat ;
- US 2018/239145, qui décrit un système de vision en réalité augmentée avec une pluralité de matrices d'émetteurs lumineux, superposées les unes sur les autres ;
- l'article « EyeAR : Refocusable Augmented Reality Content through Eye Measurements », Damien Rompapas & al., MULTIMODAL TECHNOLOGIES AND INTERACTION, vol. 1, no. 4, 2017-09-26, page 22, et décrit des expérimentations pour déterminer la focale d'un œil en vue de positionner au mieux l'écran d'un système de vision en réalité augmentée ; et
- US 2014/351896, qui décrit des lunettes de vision en réalité augmentée, avec une unité d'identification d'utilisateur qui comporte une caméra.

Un objectif de la présente invention est d'améliorer les systèmes existants de vision en réalité virtuelle ou en réalité augmentée, qui comportent un support destiné à être monté sur la tête d'un utilisateur.

### EXPOSÉ DE L'INVENTION

Cet objectif est atteint avec un système de vision en réalité virtuelle ou en réalité augmentée comportant, dans un support destiné à être monté sur la tête d'un utilisateur :
- au moins une matrice d'éléments d'émission lumineuse qui s'étend selon une surface d'affichage et dédiée à l'affichage d'images destinées à être vues par l'utilisateur ; et
- au moins un système optique de projection, apte à former une image de la matrice d'éléments d'émission lumineuse sur une surface de mise au point à distance d'un œil de l'utilisateur.

Le système de vision comprend en outre :
- au moins une matrice de photo-détecteurs, adaptée à acquérir au moins une image d'une région de l'œil, qui s'étend selon une surface de capture et qui est agencée sensiblement coplanaire avec la matrice d'éléments d'émission lumineuse, avec un recouvrement au moins partiel entre la surface de capture et la surface d'affichage ; et
- un calculateur, configuré pour recevoir en entrée l'au moins une image acquise par la matrice de photo-détecteurs, et pour mettre en œuvre un traitement de ladite au moins une image de manière à en déduire un ou plusieurs paramètre(s) relatif(s) à l'utilisateur, en particulier relatif(s) à l'œil de l'utilisateur.

Selon l'invention, le système optique de projection est un système optique à focale variable, relié à un dispositif de pilotage pour le pilotage de sa focale.

L'agencement sensiblement coplanaire de la matrice de photo-détecteurs et de la matrice d'éléments d'émission lumineuse correspond à une distance entre ces dernières, selon un axe orthogonal au plan de la matrice de photo-détecteurs, inférieure ou égale à trois fois un pas de pixel de la matrice de photo-détecteurs. Plus préférentiellement encore, cette distance est inférieure ou égale au pas de pixel de la matrice de photo-détecteurs.

De manière avantageuse, le recouvrement au moins partiel se traduit par un agencement de la matrice de photo-détecteurs et de la matrice d'éléments d'émission lumineuse imbriquées l'une dans l'autre sur au moins une partie de leurs surfaces respectives. En particulier, des photo-détecteurs de la matrice de photo-détecteurs sont intercalés entre des éléments d'émission lumineuse de la matrice d'éléments d'émission lumineuse, ou inversement. Dit encore autrement, les deux matrices sont enchevêtrées ensemble, ou entrelacées ensemble, sur au moins une partie de leurs surfaces respectives. Elles peuvent notamment être définies chacune par des lignes et des colonnes qui s'entrecroisent avec les lignes et les colonnes de l'autre matrice.

La matrice de photo-détecteurs permet d'acquérir une image d'une région située à l'intérieur de l'œil, cette image étant utilisée ensuite au sein du calculateur pour en déduire un paramètre relatif à l'utilisateur. Ce paramètre peut comprendre :
- une position de l'œil de l'utilisateur, notamment une position angulaire, obtenue notamment à l'aide d'une image au moins partielle de sa rétine ;
- un mouvement de l'œil de l'utilisateur, notamment un mouvement angulaire, obtenu notamment à l'aide d'une série d'images au moins partielles de sa rétine ;
- un identifiant de l'utilisateur, déterminé à partir d'élément caractéristique d'une image de son œil, plus particulièrement une image au moins partielle de sa rétine ou de son iris ;
- un indicateur de netteté d'une image au moins partielle de sa rétine, fonction notamment de défauts d'un système optique formé par l'oeil ; etc.

De manière avantageuse, le paramètre relatif à l'utilisateur est transmis à un dispositif de sélection d'affichage pilotant un affichage vidéo par la matrice d'éléments d'émission lumineuse.

La matrice de photo-détecteurs étant agencée sensiblement coplanaire avec la matrice d'éléments d'émission lumineuse, le système selon l'invention permet d'acquérir une image de l'œil tout en offrant une grande compacité.

En outre, dans un système de vision en réalité virtuelle ou en réalité augmentée, la matrice d'éléments d'émission lumineuse est imagée, en utilisation, sur la rétine de l'œil. En d'autres termes, en utilisation, la matrice d'éléments d'émission lumineuse et la rétine sont optiquement conjuguées par un système optique comprenant au moins le système optique de projection et les éléments de l'œil entre la rétine et la cornée (plus le cas échéant des optiques de correction de la vue de type lentille de contact). La matrice de photo-détecteurs étant agencée sensiblement coplanaire avec la matrice d'éléments d'émission lumineuse, une même position de l'ensemble formé par ces dernières permet à la fois d'acquérir une image de la rétine de l'œil et de projeter des images sur cette même rétine pour qu'elles soient vues par l'utilisateur. Cette particularité trouve de nombreuses applications, notamment :
- l'acquisition d'images au moins partielles de la rétine durant un affichage vidéo par la matrice d'éléments d'émission lumineuse, pour suivre des mouvements de l'œil de l'utilisateur sans interrompre l'affichage vidéo, et permettre ainsi d'adapter en temps réel l'image vue par l'utilisateur afin de produire l'illusion d'une immersion dans un environnement virtuel ;
- l'acquisition d'une image au moins partielle de la rétine, pour identifier un utilisateur par sa rétine sans modification d'un réglage du système optique de projection ;
- l'acquisition d'une image au moins partielle de la rétine, pour calculer sa netteté et vérifier ainsi si la conjugaison optique entre la rétine, d'une part, et l'ensemble formé par la matrice de photo-détecteurs et la matrice d'éléments d'émission lumineuse, d'autre part, est bien réalisée ;
- l'acquisition d'une série d'images au moins partielles de la rétine, pour déterminer un mouvement de l'œil de l'utilisateur correspondant à une clef de déverrouillage ; etc.

L'invention concerne également un procédé d'acquisition de paramètres de l'œil, mis en œuvre à l'aide d'un système selon l'invention, et qui comprend les étapes suivantes :
- positionnement du support sur la tête d'un utilisateur;
- acquisition d'au moins une image d'une région d'un œil de l'utilisateur, à l'aide de la matrice de photo-détecteurs ; et
- traitement de l'au moins une image acquise, à l'aide du calculateur, pour en déduire un ou plusieurs paramètre(s) relatif(s) à l'œil de l'utilisateur.

L'étape d'acquisition d'au moins une image peut comprendre l'acquisition d'une image au moins partielle de la rétine. En particulier, le procédé selon l'invention comprend en outre les étapes suivantes :
- acquisition d'une image au moins partielle de la rétine, à l'aide de la matrice de photo-détecteurs ;
- à l'aide du calculateur, calcul d'un indicateur représentatif de la netteté de l'image acquise, formulation de la commande d'ajustement de focale, et transmission de cette commande au dispositif de pilotage ;
- à l'aide du dispositif de pilotage, ajustement de la focale du système optique de projection selon ladite commande d'ajustement de focale ;
ces étapes étant mises en œuvre une ou plusieurs fois, et jusqu'à obtention d'un maximum de netteté de l'image de la rétine.

Le procédé selon l'invention peut être mis en œuvre dans un système tel que mentionné ci-avant qui comprend en outre au moins un dispositif d'éclairement configuré pour émettre un faisceau lumineux d'éclairement en dehors du spectre visible, et lors de l'acquisition d'au moins une image, l'œil reçoit le faisceau lumineux d'éclairement émis par le dispositif d'éclairement.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- la figure 1 illustre de façon schématique et dans une vue en perspective, un premier mode de réalisation d'un système de vision en réalité virtuelle facilitant la compréhension de l'invention, en utilisation ;
- la figure 2 illustre de façon schématique et dans une vue en coupe, le système de vision de la figure 1 ;
- les figures 3A à 3C illustrent, dans des vues en coupe, différentes variantes d'un ensemble appartenant à un système selon l'invention, et comprenant une matrice de photo-détecteurs et une matrice d'éléments d'émission lumineuse ;
- les figures 4A à 4C illustrent des exemples de répartition des pixels de la matrice de photo-détecteurs et de la matrice d'éléments d'émission lumineuse d'un système selon l'invention ;
- la figure 5 illustre de façon schématique et dans une vue en coupe, un deuxième mode de réalisation d'un système de vision facilitant la compréhension de l'invention;
- les figures 6A et 6B illustrent deux variantes d'un ensemble comprenant la matrice de photo-détecteurs, la matrice d'éléments d'émission lumineuse, et le dispositif d'éclairement d'un système de vision selon la figure 5 ;
- la figure 7 illustre de façon schématique et dans une vue en coupe, un premier mode de réalisation d'un système de vision selon l'invention ;
- les figures 8A et 8B illustrent de façon schématique, dans une vue en coupe, et dans deux positions différentes, un deuxième mode de réalisation d'un système de vision selon l'invention ; et
- les figures 9 à 13 illustrent de façon schématique différents procédés aptes à être mis en œuvre à l'aide d'un système de vision selon l'invention.

### EXPOSÉ DÉTAILLÉ DE MODES DE RÉALISATION PARTICULIERS

Pour plus de clarté, on a représenté sur les figures les axes (Ox), (Oy) et/ou (Oz) d'un repère orthonormé.

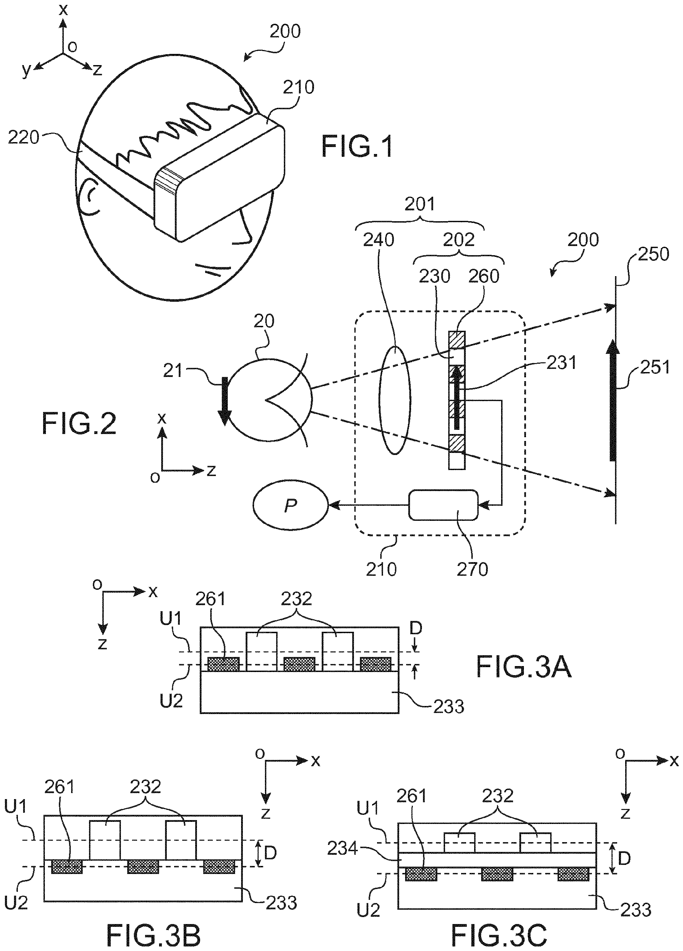

Les figures 1 à 6B se rapportent à des systèmes de vision qui se distinguent du système de vision selon l'invention uniquement en ce que leur système optique de projection n'est pas un système optique à focale variable, relié à un dispositif de pilotage pour le pilotage de sa focale. Ces figures permettent néanmoins de faciliter la compréhension de l'invention et d'illustrer certains aspects du système optique de projection selon l'invention.

La figure 1 illustre, selon une vue en perspective, et de manière schématique, un premier mode de réalisation d'un système de vision en réalité virtuelle 200 facilitant la compréhension de l'invention, représenté en utilisation monté sur la tête d'un utilisateur. Le système de vision 200 comprend un support 210 destiné à être monté sur la tête d'un utilisateur, ici un masque 210. En utilisation, le masque 210 est maintenu contre le visage de l'utilisateur, en recouvrant ses yeux, notamment à l'aide d'une sangle 220 montée solidaire du masque 210 et passant derrière la tête de l'utilisateur.

La figure 2 illustre de façon schématique, et dans une vue en coupe dans un plan (xOz), le système de vision 200 de la figure 1.

Pour faciliter la compréhension de l'invention, on a représenté également un œil 20 de l'utilisateur, tel qu'il se positionne relativement au système de vision 200, en utilisation. L'oeil 20 n'appartient pas au système de vision selon l'invention. Afin de définir le référentiel utilisé, il est défini que lorsque l'utilisateur regarde droit devant lui, un axe de visée de l'œil s'étend parallèle à l'axe (Oz).

Le système de vision 200 comporte, embarqués dans le support 210, deux ensembles 201 comportant chacun :
- une matrice d'éléments d'émission lumineuse 230 ;
- un système optique de projection 240 ; et
- une matrice de photo-détecteurs 260.

Chaque ensemble 201 est associé à l'un des deux yeux de l'utilisateur, et s'étend, en utilisation, en face de cet œil, à quelques centimètres de ce dernier.

La matrice d'éléments d'émission lumineuse 230, forme un écran d'affichage vidéo pour afficher des images destinées à être vues par l'œil correspondant. Les éléments d'émission lumineuse sont agencés de préférence selon des lignes et des colonnes, et configurés pour émettre dans le spectre visible. Les éléments d'émission lumineuse sont constitués de diodes électroluminescentes, notamment des diodes électroluminescentes à base de nitrure de gallium (GaN, InGaN, etc.) ou des diodes électroluminescentes organiques (OLED ou micro-OLED). Ils comprennent de préférence des diodes de différents types, émettant respectivement dans le rouge, le bleu et le vert. Des moyens de pilotage, non représentés, permettent de piloter l'allumage et l'extinction des éléments d'émission lumineuse. La matrice d'éléments d'émission lumineuse 230 s'étend ici dans un plan parallèle au plan (xOy). En figure 2, une flèche 231 représente une image affichée sur la matrice d'éléments d'émission lumineuse, 230.

Le système optique de projection 240 est constitué d'une ou plusieurs lentilles, qui en utilisation s'étendent entre l'œil 20 et la matrice d'éléments d'émission lumineuse 230. La vergence du système optique de projection 240 est d'environ 20 *δ*. De préférence, il ne s'agit pas d'une matrice de microlentilles mais d'une ou plusieurs lentilles larges. Le système optique de projection 240 est configuré pour projeter une image virtuelle de la matrice 230, sur une surface de mise au point 250 situé à distance de l'œil 20.

En utilisation, et lorsque cet œil est au repos (n'accommode pas), la surface de mise au point 250 est optiquement conjuguée avec une surface passant par la rétine de l'œil 20, en particulier une surface passant par la fovéa.

En d'autres termes, l'œil 20 au repos voit alors nets les objets situés sur la surface de mise au point 250. La conjugaison optique entre la surface de mise au point 250 et la surface passant par la rétine est réalisée par un système optique formé par les éléments de l'œil entre la rétine et la cornée, et le cas échéant une optique de correction de la vue telle qu'une lentille de contact. Pour un œil emmétrope, la surface de mise au point 250 s'étend à l'infini, et la matrice 230 se trouve dans le plan focal image du système optique de projection 240. En tout état de cause, la surface de mise au point 250 s'étend du côté de la matrice 230 opposé au système optique de projection 240, généralement plusieurs mètres en aval de celle-ci selon l'axe (Oz). En figure 2, une flèche 251 représente de façon schématique l'image projetée sur la surface de mise au point 250 par le système optique de projection 240. La figure 2 montre également une flèche 21 représentant de façon schématique l'image formée sur la rétine, conjuguée de l'image 251 formée sur la surface de mise au point.

La matrice de photo-détecteurs 260 forme un capteur d'image sensiblement coplanaire avec la matrice d'éléments d'émission lumineuse 230, dans un plan parallèle au plan (xOy).

La matrice de photo-détecteurs 260 et la matrice d'éléments d'émission lumineuse 230 forment un ensemble solidaire 202.

Les photo-détecteurs de la matrice 260 s'étendent selon une surface nommée surface de capture. Les éléments d'émission lumineuse de la matrice 230 s'étendent selon une surface nommée surface d'affichage. Une projection orthogonale de ladite surface de capture, dans un plan (xOy), est de préférence superposée avec une projection dans ce même plan de ladite surface d'affichage. La superposition peut être totale ou partielle. En d'autres termes, il y a recouvrement total ou partiel entre la surface de capture et la surface d'affichage.

Les photo-détecteurs sont agencés de préférence selon des lignes et des colonnes. Ils sont constitués ici chacun d'une photodiode. De préférence, les photo-détecteurs de la matrice de photo-détecteurs présentent tous les mêmes caractéristiques en détection.

En utilisation, une surface passant par la rétine est optiquement conjuguée avec la surface de mise au point 250, elle-même optiquement conjuguée avec une surface recevant la matrice de d'éléments d'émission lumineuse 230. Ainsi, une image affichée par ladite matrice 230 est projetée jusque sur la rétine de l'œil. Du fait du retour inverse de la lumière, la matrice d'éléments d'émission lumineuse 230 reçoit, de façon symétrique, une image de la rétine de l'œil. La matrice de photo-détecteurs 260 étant agencée sensiblement coplanaire avec la matrice 230, elle reçoit, en fonctionnement, cette image de la rétine. Ainsi, une image vue nette par l'utilisateur correspond à une image nette acquise par la matrice de photo-détecteurs 260.

En modifiant la focale du système optique de projection 240, on peut imager d'autres régions de l'œil, par exemple l'iris, à l'aide de la matrice de photo-détecteurs 260.

Le système de vision 200 comporte également un calculateur, ou processeur 270. Dans le mode de réalisation de la figure 2, le calculateur 270 est embarqué sur le support 210. En variante, ce calculateur 270 peut être déporté du support 210 en étant relié à ce dernier par une liaison filaire ou non filaire. Le calculateur 270 est configuré pour recevoir au moins une image de l'œil acquise par la matrice de photo-détecteurs 260, et pour mettre en œuvre un traitement de cette image de manière à en déduire un ou plusieurs paramètre(s) P relatif(s) à l'utilisateur. On détaille dans la suite différents traitements pouvant être mis en œuvre en utilisant ce calculateur 270.

La figure 3A illustre de manière légèrement plus détaillée qu'en figure 2, dans une vue en coupe dans un plan parallèle au plan (xOz), un exemple de réalisation de l'ensemble comprenant la matrice d'éléments d'émission lumineuse et la matrice de photo-détecteurs. Dans cet exemple de réalisation, la matrice de photo-détecteurs est imbriquée dans la matrice d'éléments d'émission lumineuse, avec chaque photo-détecteur 261 de la matrice de photo-détecteurs encadré entre plusieurs éléments d'émission lumineuse 232 de la matrice d'éléments d'émission lumineuse.

Les éléments d'émission lumineuse 232 s'étendent sur un substrat, en particulier un semi-conducteur 233. Les photo-détecteurs 261 s'étendent également sur ce même substrat 233.

On définit un premier plan médian U1, parallèle au plan (xOy) de la matrice de photo-détecteurs 260, et s'étendant à mi-hauteur de la matrice d'éléments d'émission lumineuse 230, selon l'axe (Oz). De la même manière, on définit un second plan médian U2, parallèle au plan (xOy) de la matrice de photo-détecteurs, et s'étendant à mi-hauteur de la matrice de photo-détecteurs, selon l'axe (Oz). Selon l'invention, une distance D entre les plans *U1* et *U2,* selon l'axe (Oz), est inférieure ou égale à trois fois un pas de répartition des photo-détecteurs de la matrice de photo-détecteurs 260. Plus préférentiellement encore, cette distance *D* est inférieure ou égale au pas de répartition des photo-détecteurs de la matrice de photo-détecteurs. En d'autres termes, la matrice de photo-détecteurs est agencée sensiblement coplanaire avec la matrice d'éléments d'émission lumineuse.

Les éléments d'émission lumineuse 232 sont constitués par exemple chacun d'une OLED. Ils peuvent être agencés ensemble en matrice de type AMOLED (Matrice d'active d'OLED).

En variante, les éléments d'émission lumineuse 232 sont constitués par exemple chacun d'une LED au nitrure de gallium. Les LED au nitrure de gallium sont réalisées de préférence selon un procédé de fabrication tel que décrit dans la demande de brevet WO2017/194845. Ce procédé comprend les étapes suivantes :
- rapporter, sur une face de circuits intégrés de contrôle comportant une pluralité de pistes métalliques de connexion, un empilement actif de diode comportant au moins des première et deuxième couches semi-conductrices dopées de types de conductivité opposés, de façon que la deuxième couche de l'empilement soit électriquement connectée aux pistes métalliques des circuits de contrôle ; et
- former dans l'empilement actif des tranchées délimitant une pluralité de diodes connectées à des pistes métalliques distinctes des circuits de contrôle.

Lors de l'étape de report de l'empilement actif de diode, les positions des LED ne sont pas encore définies. Il n'y a donc pas de contrainte forte en termes de précision d'alignement. La délimitation des LED est réalisée ensuite par des procédés de structuration offrant une précision d'alignement nettement supérieure à celle pouvant être obtenue par report d'un substrat sur un autre. Un tel procédé permet de réaliser une matrice de LED au nitrure de gallium et une matrice de photo-détecteurs sur un même substrat, avec des pixels de l'une matrice situés entre des pixels de l'autre matrice. Grâce à la grande précision d'alignement des LED sur le substrat, on conserve une très bonne résolution de la matrice d'éléments d'émission lumineuse. On peut également combiner la haute résolution de la matrice d'éléments d'émission lumineuse avec une haute résolution de la matrice de photo-détecteurs. Les LED au nitrure de gallium présentent également l'avantage d'offrir une grande puissance d'émission, ce qui permet de réserver une part importante de la surface du substrat aux photo-détecteurs.

La figure 3B illustre une variante de répartition des éléments d'émission lumineuse 232 et des photo-détecteurs 261. Selon cette variante, les éléments d'émission lumineuse 232 sont agencés sur le substrat semi-conducteur 233, à l'extérieur de ce dernier et en contact physique direct avec lui. Les photo-détecteurs 261 sont agencés à l'intérieur du substrat 233, affleurant à la surface supérieure de ce dernier du côté des éléments d'émission lumineuse 232.

La figure 3C illustre une autre variante de répartition des éléments d'émission lumineuse 232 et des photo-détecteurs 261. Selon cette variante, les éléments d'émission lumineuse 232 sont agencés au-dessus du substrat semi-conducteur 233, séparés de ce dernier par une couche intercalaire 234, tandis que les photo-détecteurs 261 sont agencés dans le substrat 233, affleurant à la surface supérieure de ce dernier du côté des éléments d'émission lumineuse 232.

De nombreuses autres variantes peuvent être mises en œuvre sans sortir du cadre de l'invention, par exemple avec des éléments d'émission lumineuse transparents, de type OLED, autorisant ainsi les éléments d'émission lumineuse à s'étendre au-dessus des photo-détecteurs en les recouvrant. Selon d'autres variantes, les deux matrices sont agencées sur des substrats distincts disposés proches l'un de l'autre.

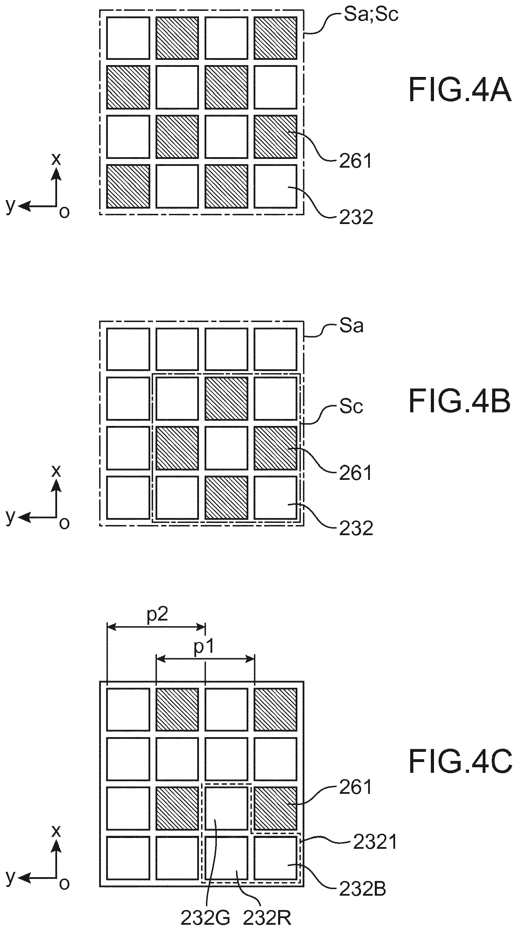

Les figures 4A à 4C illustrent de façon schématique différents exemples de répartition des pixels de la matrice de photo-détecteurs et des pixels de la matrice d'éléments d'émission lumineuse, dans un plan parallèle au plan (Oxy).

Dans les exemples représentés, il n'y a pas de recouvrement entre les éléments d'émission lumineuse 232 et les photo-détecteurs 261. Des photo-détecteurs 261 de la matrice de photo-détecteurs sont situés chacun entre plusieurs éléments d'émission lumineuse 232 de la matrice d'éléments d'émission lumineuse.

La figure 4A illustre en particulier une matrice de photo-détecteurs 261 qui s'étendent selon la surface de capture Sc, et une matrice d'éléments d'émission lumineuse 232 qui s'étendent selon la surface d'affichage Sa. Ici, les surfaces Sc et Sa présentent la même aire et il y a recouvrement total entre ces dernières. Le pas de pixel est identique dans la matrice de photo-détecteurs et dans la matrice d'éléments d'émission lumineuse. Les éléments d'émission lumineuse peuvent se répartir en différents types d'éléments d'émission lumineuse qui diffèrent par leur longueur d'onde d'émission.

La figure 4B illustre une variante dans laquelle l'aire de la surface de capture Sc est inférieure à l'aire de la surface d'affichage Sa, et la surface de capture Sc est inscrite à l'intérieur de la surface d'affichage.

De nombreuses autres variantes peuvent être mises en œuvre sans sortir du cadre de l'invention, par exemple avec l'aire de la surface de capture Sc supérieure à l'aire de la surface d'affichage Sa, et/ou avec un recouvrement seulement partiel entre ces dernières, et/ou des pas de pixels qui différent entre les deux matrices.

La figure 4C illustre un autre exemple de répartition des photo-détecteurs et des éléments d'émission lumineuse.

Ici, les photo-détecteurs 261 sont répartis selon une matrice à maille carré de pas de répartition *p1*.

Les éléments d'émission lumineuse 232 sont répartis quant à eux en macro-pixels 2321 comportant chacun un élément d'émission dans le bleu 232B, un élément d'émission dans le rouge 232R et un élément d'émission dans le vert 232G. Les macro-pixels sont répartis selon une matrice à maille carrée de pas de répartition p2, avec ici *p2*=*p1.* Ici, les éléments d'émission lumineuse 232 et les photo-détecteurs 261 sont répartis ensemble selon un maillage carré avec un motif élémentaire qui comporte un photo-détecteur 261, un élément d'émission dans le bleu 232B, un élément d'émission dans le rouge 232R et un élément d'émission dans le vert 232G.

L'invention n'est pas limitée à ces exemples de répartition des photo-détecteurs et des éléments d'émission lumineuse. En particulier, on pourrait avoir plus de photo-détecteurs que d'éléments d'émission lumineuse, avec chaque élément d'émission lumineuse situé entre plusieurs photo-détecteurs de la matrice de photo-détecteurs. Selon d'autres variantes, on pourrait avoir une matrice à maille non carrée, par exemple hexagonale. Selon d'autres variantes, la matrice d'éléments d'émission lumineuse peut être de type matrice de Bayer ou similaire.

Selon d'autres variantes, un pas de pixel de la matrice de photo-détecteurs est supérieur ou égal à un pas de macro-pixel de la matrice d'éléments d'émission lumineuse, avec chaque macro-pixel de la matrice d'éléments d'émission lumineuse qui comporte des éléments d'émission lumineuse de trois couleurs. En effet, les inventeurs ont montré que la résolution requise pour obtenir une bonne image de la rétine est inférieure à la résolution de certains écrans utilisés dans des systèmes de vision en réalité virtuelle, ces écrans correspondant aux matrices d'éléments d'émission lumineuse selon l'invention. Une matrice d'éléments d'émission lumineuse selon l'invention est constituée par exemple de 1280^{∗}1024 macro-pixels, voire 2048^{∗}2048 macro-pixels. Or, une image de la surface utile de la rétine, formée de 768^{∗}576 pixels, offre une résolution suffisante pour l'invention (dans certaines applications décrites ci-après telles que l'ajustement du réglage du système optique de projection, une résolution moindre peut suffire). En outre, la matrice d'éléments d'émission lumineuse projette généralement une image sur une partie seulement de la surface utile de la rétine, par exemple environ un quart de cette surface utile. Une image de bonne qualité de cette portion de rétine peut alors être obtenue à l'aide d'une matrice de 284^{∗}288 éléments d'émission lumineuse, par exemple. De préférence, un pas de répartition des photo-détecteurs de la matrice de photo-détecteurs est compris entre une fois et sept fois un pas de répartition des pixels ou macro-pixels de la matrice d'éléments d'émission lumineuse, où chaque macro-pixel de la matrice d'éléments d'émission lumineuse comprend des éléments d'émission lumineuse à des longueurs d'onde différentes. On a par exemple un rapport inférieur ou égal à 3 entre ces deux pas de répartition.

Sur les figures, les éléments d'émission lumineuse et les photo-détecteurs sont représentés de même dimension. En pratique, il est avantageux que les photo-détecteurs présentent chacun une plus grande surface que les éléments d'émission lumineuse, pour augmenter leur sensibilité. C'est notamment possible avec des LED GaN qui offrent une grande puissance d'émission.

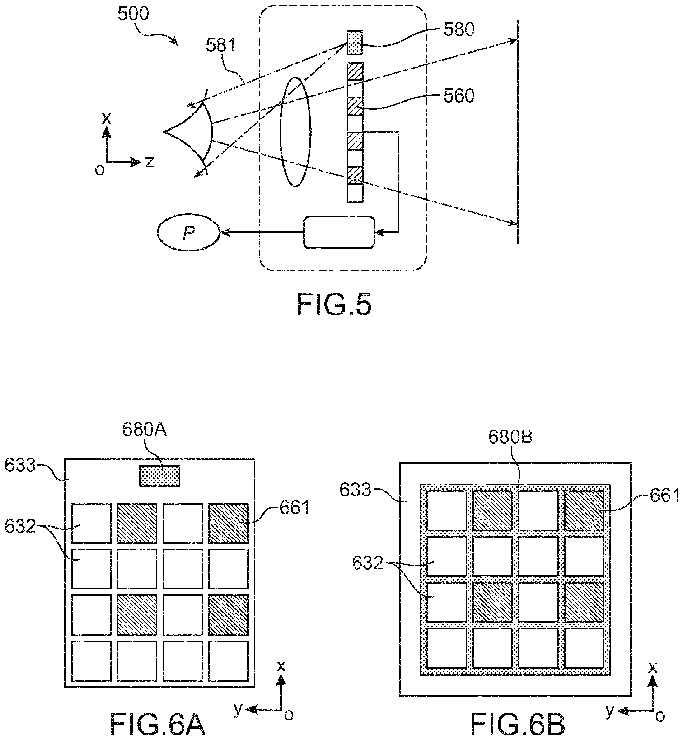

La figure 5 illustre de façon schématique, dans une vue en coupe dans un plan (xOz), un deuxième mode de réalisation d'un système de vision 500 facilitant la compréhension de l'invention. Le système de vision 500 ne diffère de celui de la figure 2 qu'en ce qu'il comporte en outre deux dispositifs d'éclairement 580, associés chacun à un œil de l'utilisateur.

Chaque dispositif d'éclairement 580 est apte à émettre vers l'œil correspondant, en utilisation, un faisceau lumineux d'éclairement 581. Le faisceau lumineux d'éclairement 581 présente un spectre en longueur d'onde avec un pic d'émission situé en dehors du spectre visible, c'est-à-dire en dehors de la bande spectrale allant de 380 nm à 750 nm. De préférence, le spectre en longueur d'onde du faisceau lumineux 581 s'étend dans le proche infra-rouge ou l'infrarouge-moyen, à des longueurs d'onde comprises entre 780 nm et 10 µm. Chaque dispositif d'éclairement 580 est constitué par exemple d'une LED infrarouge, ou d'une OLED infrarouge.

Les photo-détecteurs des matrices de photo-détecteurs 560 sont sensibles aux longueurs d'onde d'émission des dispositifs d'éclairement 580.

Chaque dispositif d'éclairement 580 permet d'éclairer l'œil correspondant à l'aide d'une lumière visible par la matrice de photo-détecteurs 560 associée, et non visible par l'œil. De cette manière, on peut obtenir une image de l'œil bien éclairée, sans éblouir l'utilisateur.

La figure 6A illustre de manière schématique, et dans une vue en coupe dans un plan parallèle au plan (Oxy), un ensemble comprenant la matrice de photo-détecteurs, la matrice d'éléments d'émission lumineuse, et le dispositif d'éclairement selon l'invention.

Les photo-détecteurs 661 et les éléments d'émission lumineuse 632 sont répartis comme illustré en figure 4C. Un dispositif d'éclairement 680A selon l'invention est agencé avec ces derniers sur le même substrat 633, extérieurement à la matrice d'éléments d'émission lumineuse.

Selon une variante avantageuse, le dispositif d'éclairement peut s'étendre selon une surface d'éclairement agencée sensiblement coplanaire avec la matrice de photo-détecteurs et la matrice d'éléments d'émission lumineuse, et avec un recouvrement au moins partiel entre la surface d'éclairement et la surface de capture, respectivement la surface d'affichage. Dans la variante illustrée en figure 6B, le dispositif d'éclairement 680B est constitué d'une unique OLED qui s'étend selon toute l'étendue de la matrice d'éléments d'émission lumineuse. De préférence, l'OLED comporte des ouvertures traversantes au niveau de chaque pixel de la matrice de photo-détecteurs et/ou de chaque élément d'émission lumineuse, pour laisser passer la lumière. En variante, l'OLED peut être transparente ou partiellement transparente dans le visible et/ou aux longueurs détectées par les photo-détecteurs. Selon une autre variante, le dispositif d'éclairement est constitué d'une matrice d'OLED réparties selon le même maillage que les photo-détecteurs de la matrice de photo-détecteurs. Les OLED étant toutes allumées ou éteintes en même temps, il n'est pas nécessaire de prévoir des transistors de pilotage indépendants pour chaque OLED.

Selon d'autres variantes, chaque dispositif d'éclairement est déporté d'un substrat recevant la matrice de photo-détecteurs et la matrice d'éléments d'émission lumineuse correspondantes. Selon d'autres variantes encore, le système de vision comporte un seul dispositif d'éclairement, pour éclairer un seul des deux yeux.

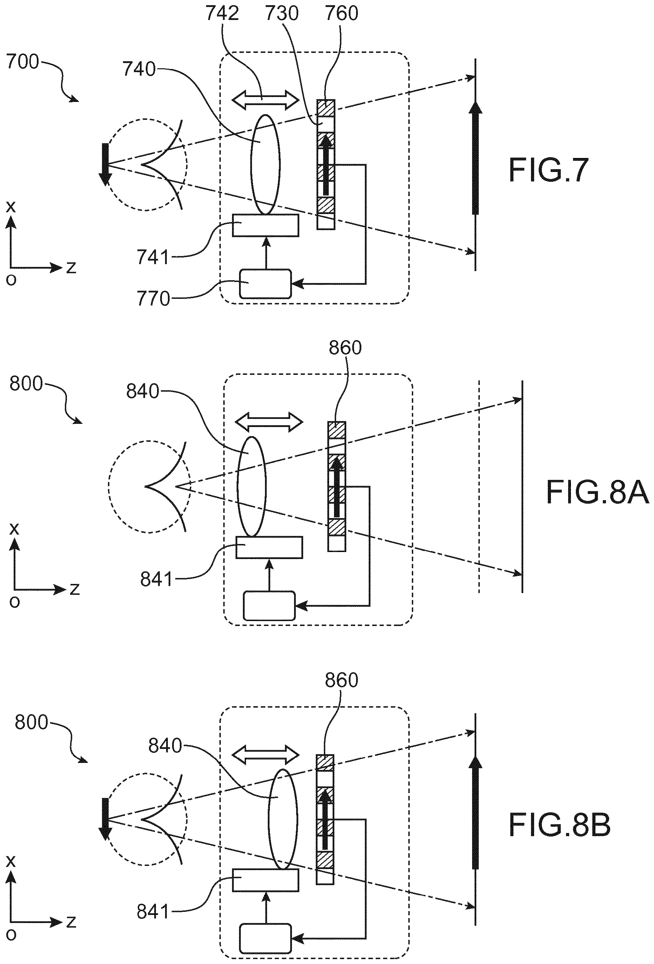

La figure 7 illustre de façon schématique, dans une vue en coupe dans un plan (xOz), un premier mode de réalisation d'un système de vision 700 selon l'invention.

Le système de vision 700 ne diffère de celui de la figure 2 qu'en ce que chaque système optique de projection 740 est un système optique à focale variable, relié à un dispositif 741 respectif pour le pilotage de sa focale.

Le système optique de projection 740 peut être constitué d'une ou plusieurs lentilles, dont l'une au moins est apte à être translatée le long d'un axe parallèle à (Oz). La translation est obtenue à l'aide d'une stimulation mécanique fournie par le dispositif 741 correspondant. En variante, le système optique de projection 740 peut être constitué d'une ou plusieurs lentilles, dont l'une au moins peut être déformée mécaniquement à l'aide d'une stimulation électrique fournie par le dispositif 741 correspondant (lentille à focale variable).

Le dispositif 741 de pilotage de focale est configuré pour recevoir en entrée une commande fournie par le calculateur 770, de préférence sous forme numérique, et pour convertir cette commande en une stimulation sur le système optique de projection 740, de manière à modifier sa focale de manière maîtrisée.

Le calculateur 770 est configuré pour recevoir en entrée une image formée sur la matrice de photo-détecteurs 760, en particulier une image au moins partielle de la rétine. Si cette image est floue, cela signifie que la matrice de photo-détecteurs 760 n'est pas parfaitement optiquement conjuguée avec la rétine de l'œil. Comme la matrice de photo-détecteurs 760 est agencée sensiblement coplanaire avec la matrice d'éléments d'émission lumineuse 730, cela signifie également que la matrice d'éléments d'émission lumineuse 730 n'est pas parfaitement optiquement conjuguée avec la rétine de l'œil. Autrement dit, dans cette configuration, l'utilisateur voit une image floue.

Le calculateur 770 est configuré pour calculer un indicateur de netteté de cette image au moins partielle de la rétine. L'indicateur de netteté désigne un indicateur caractéristique de la netteté de l'image, c'est-à-dire de la mesure selon laquelle les contours des motifs composant l'image sont nets ou au contraire flous. Lesdits motifs sont formés de préférence par les vaisseaux sanguins visibles sur une image de la rétine. L'indicateur de netteté est de préférence un indicateur numérique. Le calcul de l'indicateur de netteté se base de préférence sur une analyse de contours. L'homme du métier saura trouver dans la littérature de nombreuses méthodes pour calculer un tel indicateur. Par exemple, l'indicateur de netteté est un paramètre relatif à l'étalement des bords du motif, notamment un gradient maximal de pixel (différence maximale entre les valeurs de deux pixels voisins). Le calculateur 770 est configuré en outre pour formuler, à partir de l'indicateur de netteté, une commande dite d'ajustement de focale. La commande d'ajustement de focale est une commande apte à modifier la focale du système optique de projection 740 de manière que l'indicateur de netteté de l'image reçue par le calculateur 770 varie dans le sens d'une augmentation de la netteté. Le calculateur 770 est relié en sortie au dispositif 741 de pilotage de focale, pour lui transmettre ladite commande d'ajustement de focale.

Le calculateur réalise ainsi un asservissement, pour amener puis maintenir la netteté de l'image reçue à une valeur maximale. En d'autres termes, il réalise un réglage automatique du système de vision 700 à la vue de l'utilisateur, pour adapter ledit système de vision 700 aux particularités propres à l'œil de l'utilisateur, voire aux conditions d'utilisation (positionnement de lentilles de contact par exemple).

Le système de vision 700 peut comporter en outre une mémoire, non représentée, pour y stocker des paramètres associant un identifiant d'utilisateur et un réglage optimal des focales respectives des systèmes optiques de projection 740 associés aux deux yeux de l'utilisateur.

Selon une variante non représentée, un pilotage de la focale du système optique de projection peut être mis en œuvre manuellement, par un utilisateur qui modifie le réglage de la focale jusqu'à voir nette une image affichée par la matrice d'éléments d'émission lumineuse. Le pilotage peut être mis en œuvre via une application sur un smartphone, transmettant par exemple par Bluetooth une commande d'ajustement de focale au dispositif 741 de pilotage de focale.

Les figures 8A et 8B illustrent ensemble un deuxième mode de réalisation d'un système de vision 800 selon l'invention, représenté sur les deux figures dans une vue en coupe dans un plan (xOz).

Dans ce mode de réalisation également, chaque système optique de projection 840 est un système optique à focale variable, relié à un dispositif 841 respectif pour le pilotage de la focale. Chaque système optique de projection 840 est apte à prendre au moins deux positions, parmi lesquelles :
- une position d'acquisition d'image de l'iris, illustrée en figure 8A, dans laquelle la matrice de photo-détecteurs 860 et une surface passant par l'iris de l'œil sont optiquement conjuguées deux à deux, par l'intermédiaire d'un système optique comprenant le système optique de projection 840, des éléments de l'œil entre l'iris et la cornée, et le cas échéant une lentille de contact ; et
- une position d'acquisition d'image de la rétine, illustrée en figure 8B, dans laquelle la matrice de photo-détecteurs 860 et une surface passant par la rétine de l'œil sont optiquement conjuguées deux à deux, par l'intermédiaire d'un système optique comprenant le système optique de projection 840, des éléments de l'œil entre la rétine et la cornée, et le cas échéant, une lentille de contact.

Chaque système optique de projection 840 prend l'une ou l'autre de ces deux positions, en fonction d'une consigne fournie par le dispositif 841 correspondant.

Le calculateur 870 est apte à mettre en œuvre une analyse de l'image reçue pour en déduire un paramètre relatif à l'utilisateur, en particulier lorsque le système optique de projection 840 est en position d'acquisition d'image de l'iris.

Les différents modes de réalisation présentés ci-dessus peuvent être combinés entre eux.

De nombreuses autres variantes peuvent être mises en œuvre sans sortir du cadre de l'invention, par exemple les deux matrices d'éléments d'émission lumineuse formées ensemble d'un seul tenant en un même écran.

Selon une variante avantageuse, le système de vision selon l'invention comporte un mobile multifonction (smartphone), d'une part, et un support apte à être monté sur la tête d'un utilisateur, d'autre part. La surface de l'écran du mobile multifonction est divisée en deux zones, formant chacun l'une des deux matrices d'éléments d'émission lumineuse d'un système de vision selon l'invention. L'écran est adapté pour incorporer également un capteur dont la surface est divisée en deux zones formant chacune une matrice de photo-détecteurs selon l'invention. De même, un processeur embarqué sur le mobile multifonction forme le calculateur d'un système de vision selon l'invention. Le support est formé distinct du mobile multifonction, muni d'un logement adapté à recevoir le mobile multifonction de sorte qu'en utilisation, l'écran s'étende devant les yeux de l'utilisateur. Le support est muni de deux systèmes optiques de projection, agencés pour se trouver devant l'écran, en utilisation, et pour former deux systèmes optiques de projection d'un système de vision selon l'invention. Pour des dimensions standards d'un écran de mobile multifonction, de l'ordre de 14^{∗}7 cm², on obtient une image satisfaisante de la rétine avec un système optique de projection présentant un grandissement d'environ 3. Ce grandissement est compatible avec la résolution des écrans de mobile multifonction courants dans le commerce ainsi qu'avec l'acuité visuelle de l'œil humain.

L'invention peut couvrir également ledit mobile multifonction, destiné à former partie intégrante d'un système de vision selon l'invention.

On a décrit dans les exemples différents modes de réalisation d'un système de vision en réalité virtuelle selon l'invention. Selon d'autres modes de réalisation, non représentés, le système de vision selon l'invention forme un système de vision en réalité augmentée. L'homme du métier saura aisément adapter les exemples décrits ci-dessus au cas d'un système de vision en réalité augmentée, par exemple en préférant l'utilisation d'un substrat transparent pour réaliser les éléments d'émission lumineuse et les photo-détecteurs (par exemple un substrat TFT et des éléments d'émission lumineuse de type OLED). En complément ou en variante, l'homme du métier saura intégrer une ou plusieurs lames partiellement réfléchissantes, pour déporter les matrices de photo-détecteurs et d'éléments d'émission lumineuse hors du champ de vision de l'œil et laisser passer la lumière provenant d'une scène extérieure.

Selon d'autres variantes non représentées, la matrice d'éléments d'émission lumineuse, et avec elle la matrice de photo-détecteurs, s'étendent selon une surface courbe. Un tel agencement peut être mis en œuvre pour minimiser des aberrations apportées par le système optique de projection.

De préférence, le système de vision selon l'invention comporte deux ensembles comportant chacun une matrice d'éléments d'émission lumineuse, une matrice de photo-détecteurs, et un système optique de projection. Chacun de ces ensembles est dédié à un œil de l'utilisateur. L'invention n'est cependant pas limitée à cette configuration, et peut également couvrir des dispositifs comportant par exemple une seule matrice de photo-détecteurs, par exemple pour réaliser une identification sur un seul œil d'utilisateur.

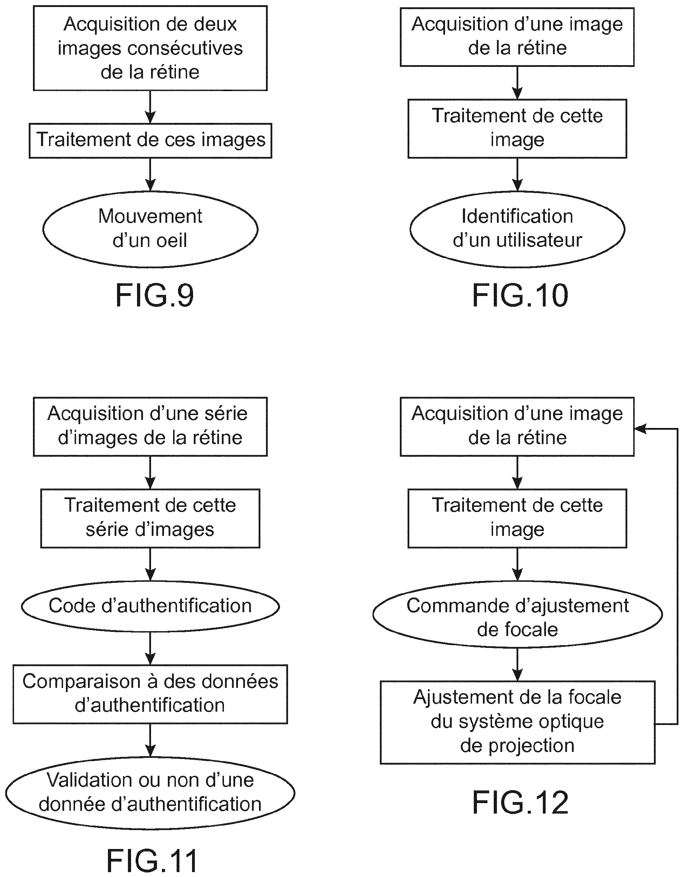

Les figures 9 à 13 illustrent différents procédés mis en œuvre à l'aide d'un système de vision selon l'invention. Tous ces procédés comprennent une étape préliminaire, non représentée, de positionnement sur la tête de l'utilisateur du support apte à être monté sur la tête d'un utilisateur. Il s'agit par exemple d'une étape de placement de masque devant les yeux de l'utilisateur.

Le procédé de la figure 9 est un procédé de suivi de la direction du regard. Il comprend les étapes suivantes, mises en œuvre de préférence pour les deux yeux de l'utilisateur :
- acquisition de deux images au moins partielles de la rétine, à l'aide de la matrice de photo-détecteurs selon l'invention ;
- traitement desdites images, à l'aide du calculateur, pour en déduire un mouvement de la rétine entre l'acquisition de l'une et l'autre desdites images.

Ledit mouvement correspond avantageusement à une rotation de la ligne de visée de l'œil, où la ligne de visée est une ligne reliant un point fixé par l'œil et le centre de cet oeil. Le mouvement est déduit d'une comparaison entre les deux images successives de la rétine, en particulier une corrélation croisée entre celles-ci. Les procédés connus de comparaison d'images pour définir un déplacement pourront être utilisés.

On acquiert de préférence des images de la rétine par intermittence, pendant toute la durée d'un affichage vidéo par la matrice d'éléments lumineux. Chaque image acquise est comparée avec l'image précédente, pour en déduire un mouvement de la rétine entre les deux instants d'acquisition correspondant. Il n'y a pas besoin d'une image complète de la rétine pour obtenir une détection fluide des mouvements de l'œil. Un pavé de pixels de la matrice de photo-détecteurs suffit, centré sur le centre de la matrice d'éléments d'émission lumineuse. Les dimensions du pavé de pixels sont fonction d'une vitesse maximale de déplacement de l'œil relativement à la matrice de photo-détecteurs, et d'une cadence d'acquisition d'images de la rétine. Par exemple, on acquiert les images de rétine à la même cadence que l'affichage d'images sur la matrice d'éléments d'émission lumineuse. Les images de rétine sont acquises par exemple à une fréquence de 10 images par seconde. Dans ces conditions, et en supposant que 1000 pixels de la matrice de photo-détecteurs correspond à 110° sur le champ de vision, un pavé de 100^{∗}100 photo-détecteurs suffit pour offrir une mesure fluide des déplacements de l'œil. On peut diminuer le nombre de pixels du pavé si l'on augmente la fréquence d'acquisition d'images.

Les informations relatives au mouvement de la rétine sont transmises en temps réel à un processeur qui gère l'affichage vidéo sur les matrices d'éléments d'émission lumineuse. On peut ainsi adapter en temps réel l'affichage vidéo au mouvement de l'œil.

Dans une variante non représentée, on détermine une position de l'œil, et plus particulièrement une orientation de la ligne de visée, à l'aide d'une unique image de la rétine que l'on compare à des données de calibrage. Les données de calibrage peuvent être obtenues à l'aide d'une étape préliminaire de calibrage, au cours de laquelle on affiche sur la matrice d'éléments d'émission lumineuse une série de points en des emplacements déterminés, et on analyse les images de rétine obtenues lorsque l'utilisateur fixe successivement chacun de ces points.

On peut considérer que dans les deux cas, on détermine une position de l'œil, soit une position relative, soit une position absolue.

Le procédé de la figure 10 illustre un procédé d'identification d'un utilisateur à l'aide d'une image de sa rétine. Il comprend les étapes suivantes :
- acquisition d'une image au moins partielle de la rétine, à l'aide de la matrice de photo-détecteurs selon l'invention ;
- traitement de cette image à l'aide du calculateur, pour en déduire un identifiant de l'utilisateur.

De manière avantageuse, lors d'un instant précédant immédiatement l'acquisition d'image, la matrice d'éléments d'émission lumineuse affiche une image comportant un motif au centre, et l'utilisateur fixe ce motif.

Le calculateur est avantageusement relié à une base de données, stockant une pluralité de couples associant chacun un identifiant d'utilisateur et une image au moins partielle de sa rétine. Il recherche ensuite dans la base de données le couple contenant l'image de rétine la plus proche de l'image acquise, et isole l'identifiant associé à ce couple. En variante, on compare les images de rétine indirectement, à partir de paramètres caractéristiques déterminés sur ces dernières.

Selon une variante avantageuse, on peut acquérir successivement plusieurs images partielles de la rétine puis combiner ces images pour former une image complète de la rétine. On compare alors des images complètes de rétine. Cette variante permet de réduire le nombre de pixels de la matrice de photo-détecteurs. Les plusieurs images partielles sont obtenues de préférence en demandant à l'utilisateur de suivre du regard un point mouvant. Le cas échéant, l'image partielle de rétine peut être acquise à l'aide d'une matrice de photo-détecteurs agencée coplanaire avec la matrice d'éléments lumineux, mais déportée latéralement relativement à cette dernière.

On remarque que ce procédé est avantageusement mis en œuvre après ajustement de la focale du système optique de projection, de manière à acquérir une image de rétine la plus nette possible. L'ajustement de focale peut être mis en œuvre par un procédé tel que décrit dans la suite, en référence à la figure 12. En variante, il peut être piloté manuellement, l'utilisateur recherchant un réglage pour lequel il voit une image nette. Selon une autre variante, l'utilisateur indique un identifiant associé à un réglage optimal du système optique de projection puis le procédé est mis en œuvre pour confirmer ou non l'identité de l'utilisateur.

Il est également envisageable de mettre en œuvre le procédé selon l'invention sans ajustement particulier de la focale du système optique de projection, le procédé pouvant être mis en œuvre à l'aide d'images de la rétine légèrement floues.

L'identifiant d'utilisateur peut ensuite être fourni à un processeur qui gère l'affichage vidéo sur les matrices d'éléments d'émission lumineuse, par exemple pour valider ou non des accès à certains affichages ou services. Il peut également être utilisé pour obtenir des données de réglage associées à l'utilisateur, par exemple des données de réglage de la focale des systèmes optiques de projection. On peut ajuster plus particulièrement la focale du système optique de projection associé à l'autre œil que celui utilisé pour l'identification d'utilisateur. Le réglage des focales à l'aide de données préenregistrées n'empêche pas un ajustement ultérieur, plus fin, à l'aide des étapes illustrées en figure 12 (par exemple pour ajuster les focales à des conditions particulières d'utilisation telles qu'un positionnement de lentille de contact).

La figure 11 illustre un procédé d'authentification d'utilisateur, en complément ou en remplacement d'une identification par une image de l'œil. Ce procédé comprend les étapes suivantes :
- acquisition d'une pluralité d'images au moins partielles de la rétine à l'aide de la matrice de photo-détecteurs selon l'invention, tandis que l'utilisateur fixe tour à tour différents motifs, selon une séquence unique qui définit un code d'authentification, sur au moins une image affichée sur la matrice d'éléments lumineuse ;
- à l'aide du calculateur, traitement de la pluralité d'images acquises pour déterminer une suite de positions ou de déplacements de l'œil, et pour en déduire ledit code d'authentification ;
- comparaison du code d'authentification ainsi déterminé avec un code d'authentification associé à un identifiant préalablement reçu ou déterminé, de manière à valider ou invalider l'identifiant.

L'au moins une image affichée sur la matrice d'éléments lumineuse comporte une pluralité de motifs distincts répartis dans différentes régions de l'image. Il s'agit par exemple d'une image avec une étoile en haut à gauche, un disque en haut à droite, un ornithorynque en bas à gauche, une flèche en bas à droite.

Le code d'authentification est un code formulé par l'œil, correspondant à une séquence particulière de motifs. Par exemple, le code d'authentification est la séquence « ornithorynque-étoile-disque ».

La figure 12 illustre un procédé de réglage automatique du dispositif optique de projection, mis en œuvre dans un système de vision tel que celui illustré en figure 7. Ce procédé comprend les étapes suivantes :
- acquisition d'une image au moins partielle de la rétine, à l'aide de la matrice de photo-détecteurs ;
- à l'aide du calculateur, traitement de cette image pour déterminer un indicateur de netteté de cette image, formulation d'une commande d'ajustement de focale et transmission de cette commande au dispositif d'ajustement de focale ;
- ajustement de la focale du dispositif optique de projection, à l'aide du dispositif d'ajustement de focale et selon ladite commande.

De manière avantageuse, lors de l'acquisition d'image, la matrice d'éléments d'émission lumineuse affiche une image comportant au centre un motif, et l'utilisateur fixe ce motif.

L'indicateur de netteté est par exemple calculé sur les contours des vaisseaux sanguins de l'œil visibles sur l'image. Il prend par exemple la forme d'un coefficient caractéristique d'un gradient de pixel au niveau des contours des vaisseaux sanguins sur l'image.

La commande d'ajustement de focale est déterminée de manière à augmenter la netteté de l'image après ajustement de la focale du système optique de projection selon ladite commande.

Ces étapes sont mises en œuvre une ou plusieurs fois, jusqu'à obtention d'une valeur maximale de netteté.

La commande d'ajustement de focale peut correspondre à un incrément positif ou négatif. Dans une étape préliminaire, on détermine la netteté de trois images associées respectivement à une valeur initiale de la focale, à cette valeur diminuée d'un incrément, et à cette valeur augmentée d'un incrément. On détermine l'image pour laquelle la netteté est la plus forte, on en déduit que le réglage initial de la focale est optimal, ou que la focale doit être augmentée, ou que la focale doit être diminuée. Ensuite, la focale est augmentée, respectivement diminuée, par incréments successifs, et à chaque étape l'indicateur de netteté est calculé. Tant que la netteté augmente, on continue l'ajustement de focale. Lorsqu'elle se met à diminuer, on revient à la valeur précédente de la focale.

De préférence, on ajuste ainsi la focale des deux systèmes optiques de projection d'un système de vision selon l'invention.

Le cas échéant, les valeurs optimales de focales peuvent être stockées dans une mémoire, en association avec un identifiant d'utilisateur.

On peut également déterminer et stocker des valeurs optimales de distance entre les deux yeux, associées à un identifiant d'utilisateur. La valeur de distance entre les deux yeux permet de définir un cadrage optimal des images affichées par les deux matrices d'éléments d'émission lumineuse. On garantit ainsi une bonne qualité de la vision en relief. Le réglage de la distance entre les deux yeux peut impliquer le concours de l'utilisateur en indiquant au calculateur à quel moment il perçoit au mieux le relief. On peut également déterminer cette distance en identifiant la fovéa ou un point de convergence des vaisseaux sanguins sur une image de rétine. Le cas échéant, cette distance peut également être déterminée à partir d'une image de l'iris (voir plus loin).

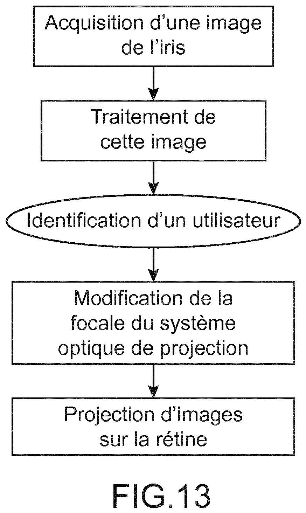

La figure 13 illustre un procédé d'identification d'un utilisateur, à l'aide d'une image au moins partielle de son iris. Un tel procédé est mis en œuvre dans un système de vision du type de celui illustré aux figures 8A et 8B. Le procédé comprend les étapes suivantes :
- ajustement de la focale du système optique de projection, pour le placer dans la position d'acquisition d'image de l'iris (voir figure 8A), et acquisition d'une image au moins partielle de l'iris à l'aide de la matrice de photo-détecteurs ;
- à l'aide du calculateur, traitement de l'image de l'iris pour en déduire un identifiant de l'utilisateur; et
- nouvel ajustement de la focale du système optique de projection, pour le placer dans la position dite d'acquisition d'image de la rétine (voir figure 8B), cette position correspondant également à une position de visualisation d'un affichage vidéo affiché par la matrice d'éléments d'émission lumineuse ; et
- affichage d'images par la matrice d'éléments d'émission lumineuse, les images étant projetées sur la rétine et formant ensemble une séquence vidéo.

Le calculateur est avantageusement relié à une base de données, qui stocke une pluralité de couples associant chacun un identifiant d'utilisateur et une image au moins partielle de son iris (ou la valeur d'un ou plusieurs paramètres caractéristiques d'une image de son iris). Le cas échéant, le calculateur détermine la valeur prise par ce ou ces paramètres caractéristiques, sur l'image acquise. Il recherche ensuite dans la base de données le couple contenant l'image d'iris la plus proche de l'image acquise, respectivement la ou les valeurs de paramètre(s) les plus proches de l'au moins une valeur ainsi déterminée, et isole l'identifiant associé à ce couple. L'identifiant peut ensuite être fourni à un processeur qui gère l'affichage vidéo sur les matrices d'éléments d'émission lumineuse, par exemple pour valider ou non des accès à certains affichages ou services.

En variante, on peut conjuguer optiquement la matrice de photo-détecteurs tour à tour avec l'iris et avec la rétine, grâce à une lentille complémentaire pouvant être insérée et retirée sur le chemin optique de la lumière entre l'œil et la matrice de photo-détecteurs.

Les différents procédés peuvent être combinés entre eux. Par exemple, l'identification par l'iris et l'identification par la rétine peuvent être mises en œuvre tour à tour, ce qui réduit encore les risques de falsification.

Le cas échéant, on peut également mettre en œuvre une identification en utilisant : la répartition des vaisseaux sanguins autour de l'iris, ou une image de la cornée, ou une image d'une région du visage autour de l'œil, ou des caractéristiques du mouvement de l'œil.

Dans chacun des procédés selon l'invention, on n'interrompt pas un affichage vidéo pour l'acquisition d'une image de l'œil, en particulier une image au moins partielle de la rétine. Dans tout le texte, une image au moins partielle de la rétine peut inclure la projection sur la rétine d'une image projetée par le système optique de projection.

De manière avantageuse, et afin de s'affranchir de l'effet des images formées sur la rétine, on acquiert une image de l'œil pendant un intervalle de temps très court entre l'affichage de deux images subséquentes d'une séquence vidéo. Pendant l'acquisition d'image, les pixels de la matrice d'éléments d'émission lumineuse peuvent être tous éteints. De manière avantageuse, ils sont tous allumés et forment ensemble une image uniforme permettant d'éclairer suffisamment l'œil. Par exemple, les images de l'affichage vidéo se succèdent à une fréquence de 100 Hz, avec à chaque période 5 ms d'affichage d'une image de la séquence vidéo et 5 ms d'extinction de la matrice d'éléments d'émission lumineuse (ou affichage d'une image uniforme).

L'affichage d'une image uniforme permet d'éclairer suffisamment une région de l'œil à imager, mais peut induire un inconfort visuel pour l'utilisateur. Une solution est d'éclairer l'œil à l'aide d'un faisceau lumineux non visible pour l'utilisateur, et d'éteindre la matrice d'éléments d'émission lumineuse durant l'acquisition d'image. La figure 5 illustre un exemple d'un système de vision facilitant la compréhension de l'invention et apte à mettre en œuvre un tel éclairage.

Lorsque l'œil reste fixe pendant la durée adaptée, on peut réaliser une acquisition lente d'une image de l'œil, et plus particulièrement une lecture lente des signaux sur les photo-détecteurs de la matrice de photo-détecteurs. L'acquisition d'une image de l'œil comporte alors plusieurs étapes élémentaires de lecture de signal, et à chacune de ces étapes élémentaires, on lit un signal sur une partie seulement des photo-détecteurs de la matrice de photo-détecteurs (par exemple quelques lignes seulement, en tout état de cause au moins quelques pixels selon les deux axes de la matrice pour pouvoir mettre en œuvre une reconstruction d'image). Entre deux étapes élémentaires de lecture du signal, on affiche une ou plusieurs image(s) d'une séquence vidéo, sur la matrice d'éléments d'émission lumineuse. Différentes séquences peuvent être mises en œuvre, par exemple des cycles successifs comportant chacun un affichage d'image(s) d'une séquence vidéo, une acquisition de signal par une ou plusieurs lignes de photo-détecteurs et une lecture de la ou desdites lignes. La durée de chaque étape élémentaire est par exemple inférieure ou égale à 10 ms. La durée totale d'acquisition d'une image de l'œil est par exemple supérieure ou égale à 100 ms. En variante, la fréquence de l'affichage vidéo est de 25 images par secondes, soit une période de 40 ms. On consacre alors par exemple 10 ms à l'acquisition d'image et 30 ms à l'affichage d'image.

En augmentant une durée d'acquisition, on peut réduire une intensité de l'éclairage de la région de l'œil à imager. Cela permet par exemple de réduire une consommation énergétique d'un dispositif d'éclairement hors du spectre visible tel que décrit en relation avec la figure 5. Cela rend également possible l'utilisation de photo-détecteurs de faibles dimensions, moins sensibles que des photo-détecteurs de grande étendue.

Cette acquisition lente est particulièrement adaptée à des procédés d'identification de l'utilisateur.

D'autres séquences que celle décrite ci-dessus peuvent être mises en œuvre. Par exemple, on peut acquérir en une seule fois un signal sur tous les photo-détecteurs, puis mettre en œuvre plusieurs cycles de lecture de signal et affichage d'image(s) d'une séquence vidéo.

L'invention trouve de nombreuses applications autres que celles décrites ci-dessus. Par exemple, on peut réaliser une détection du vivant, pour vérifier que l'identification d'utilisateur s'effectue sur un œil vivant et non sur une imitation frauduleuse. Pour cela, on demande à l'utilisateur de viser une série de régions prédéterminées sur une ou plusieurs image(s) affichée(s) par la matrice d'éléments d'émission lumineuse, et on vérifie la concordance avec un mouvement de l'œil déterminé à partir d'images de la rétine. Par exemple, on demande à l'utilisateur de suivre un objet sur une séquence vidéo projetée par la matrice d'éléments d'émission lumineuse.

On peut également réaliser une détection du vivant à partir d'images de l'iris obtenues à l'aide d'un système de vision selon l'invention, en vérifiant que l'on observe bien des micro-contractions de la pupille ou des macro-contractions en réponse à une stimulation par un rayonnement infra-rouge.

Comme décrit ci-avant, il est possible d'acquérir une image complète de la rétine à partir de plusieurs images partielles obtenues pour différentes directions de visée de l'œil. Les plusieurs images partielles sont obtenues en demandant à l'utilisateur de suivre du regard un objet, sur une séquence vidéo affichée par la matrice d'éléments d'émission lumineuse. Une image complète de la rétine trouve également à s'appliquer dans le domaine de l'ophtalmologie.

## Revendications

1. Système de vision en réalité virtuelle ou en réalité augmentée (700 ; 800) comportant, dans un support destiné à être monté sur la tête d'un utilisateur :
- au moins une matrice d'éléments d'émission lumineuse (730) qui s'étend selon une surface d'affichage (Sa) et dédiée à l'affichage d'images destinées à être vues par l'utilisateur ;
- au moins un système optique de projection (740 ; 840), apte à former une image de la matrice d'éléments d'émission lumineuse sur une surface de mise au point (250) à distance d'un œil de l'utilisateur;
le système de vision en réalité virtuelle ou en réalité augmentée comprenant en outre :
- au moins une matrice de photo-détecteurs (760 ; 860), adaptée à acquérir au moins une image d'une région de l'œil, qui s'étend selon une surface de capture (Sc) et qui est agencée sensiblement coplanaire avec la matrice d'éléments d'émission lumineuse, avec un recouvrement au moins partiel entre la surface de capture (Sc) et la surface d'affichage (Sa) ; et
- un calculateur (770), configuré pour recevoir en entrée l'au moins une image acquise par la matrice de photo-détecteurs, et pour mettre en œuvre un traitement de ladite au moins une image de manière à en déduire un ou plusieurs paramètre(s) (P) relatif(s) à l'utilisateur ;
**caractérisé en ce que** le système optique de projection (740 ; 840) est un système optique à focale variable, relié à un dispositif de pilotage (741 ; 841) pour le pilotage de sa focale.

2. Système (700 ; 800) selon la revendication 1, **caractérisé en ce que** la matrice de photo-détecteurs (760 ; 860) et la matrice d'éléments d'émission lumineuse (730) sont agencées chacune dans ou sur un même substrat.

3. Système selon la revendication 1 ou 2, **caractérisé en ce qu'**il comprend en outre au moins un dispositif d'éclairement configuré pour, en fonctionnement, émettre un faisceau lumineux d'éclairement en direction de l'œil, le dispositif d'éclairement étant apte à émettre à des longueurs situées en dehors du spectre visible, et les photo-détecteurs de la matrice de photo-détecteurs étant sensibles à ces longueurs d'onde.

4. Système (700) selon l'une quelconque des revendications 1 à 3, **caractérisé en ce que** :
- le système optique de projection (740) est apte à prendre une position d'acquisition d'image de la rétine, dans laquelle le système optique de projection (740) participe, en fonctionnement, à une conjugaison optique entre la matrice de photo-détecteurs (730) et la rétine de l'oeil ; et
- le calculateur (770) est configuré pour recevoir en entrée au moins une image de la rétine, acquise par la matrice de photo-détecteurs et pour fournir au dispositif de pilotage (741) une commande d'ajustement de focale, ladite commande étant déterminée de manière à augmenter la netteté de l'image de la rétine.

5. Système (700 ; 800) selon l'une quelconque des revendications 1 à 4, **caractérisé en ce que** :
- le système optique de projection (740 ; 840) est apte à prendre une position d'acquisition d'image de la rétine, dans laquelle ce dernier participe, en fonctionnement, à une conjugaison optique entre la matrice de photo-détecteurs (760 ; 860) et la rétine de l'oeil ; et
- le calculateur (770) est configuré pour recevoir en entrée au moins une image de la rétine acquise par la matrice de photo-détecteurs et pour traiter cette image de manière à déterminer une information d'identification de l'utilisateur, une information relative à un mouvement de l'œil, ou une information relative à une position de l'œil.

6. Système (800) selon l'une quelconque des revendications 1 à 5, **caractérisé en ce que** :
- le système optique de projection (840) est apte à prendre au moins deux positions parmi une position d'acquisition d'image de la rétine, dans laquelle le système optique de projection participe, en fonctionnement, à une conjugaison optique entre la matrice de photo-détecteurs et la rétine de l'œil, et une position d'acquisition d'image de l'iris, dans laquelle le système optique de projection participe, en fonctionnement, à une conjugaison optique entre la matrice de photo-détecteurs et l'iris de l'œil ;
- le dispositif de pilotage (841) est configuré pour ajuster la focale du système optique de projection de manière à lui faire prendre l'une puis l'autre parmi la position d'acquisition d'image de l'iris et la position d'acquisition d'image de la rétine ; et
- le calculateur est configuré pour recevoir en entrée au moins une image d'iris acquise par la matrice de photo-détecteurs et pour traiter cette image de manière à déterminer une information d'identification de l'utilisateur.

7. Système selon l'une quelconque des revendications 1 à 6, **caractérisé en ce qu'**il comprend un mobile multifonction, et dans lequel :
- le mobile multifonction comporte un écran d'affichage formant la matrice d'éléments d'émission lumineuse, le calculateur, et la matrice de photo-détecteurs ; et
- le support destiné à être monté sur la tête d'un utilisateur est pourvu d'un logement pour recevoir le mobile multifonction et comporte le système optique de projection.

8. Procédé d'acquisition de paramètres de l'œil, mis en œuvre à l'aide d'un système (700 ; 800) selon l'une quelconque des revendications 1 à 7, qui comprend une étape de positionnement du support sur la tête d'un utilisateur, **caractérisé en ce qu'**il comprend ensuite les étapes suivantes :
- acquisition d'au moins une image d'une région d'un œil de l'utilisateur, à l'aide de la matrice de photo-détecteurs (760), comprenant l'acquisition d'une image au moins partielle de la rétine ; et
- traitement de l'au moins une image acquise, à l'aide du calculateur (770), pour en déduire un ou plusieurs paramètre(s) relatif(s) à l'œil de l'utilisateur, ledit traitement comprenant le calcul d'un indicateur représentatif de la netteté de l'image acquise, formulation d'une commande d'ajustement de focale, et transmission de cette commande au dispositif de pilotage (741) ;
- à l'aide du dispositif de pilotage (741), ajustement de la focale du système optique de projection (740) selon ladite commande d'ajustement de focale ;
ces étapes étant mises en œuvre une ou plusieurs fois, et jusqu'à obtention d'un maximum de netteté de l'image de la rétine.

9. Procédé selon la revendication 8, **caractérisé par** une étape d'enregistrement de données de réglage du système optique de projection (740 ; 840), en association avec une information d'identification de l'utilisateur, lesdites données de réglage étant associées à une valeur de focale du système optique de projection pour laquelle la netteté de l'image de la rétine est maximale.

10. Procédé selon la revendication 8 ou 9, **caractérisé en ce qu'**il comprend une pluralité d'étapes d'acquisition d'une image au moins partielle de la rétine, séparées deux à deux par une étape respective d'affichage d'image(s) par la matrice d'éléments d'émission lumineuse (730).

11. Procédé selon l'une quelconque des revendications 8 à 10, **caractérisé en ce que** :
- l'acquisition d'une image au moins partielle de la rétine comprend plusieurs étapes élémentaires de lecture de signal, chacune pour lire un signal sur une partie seulement des photo-détecteurs de la matrice de photo-détecteurs (760 ; 860) ; et
- les étapes élémentaires de lecture de signal sont mises en œuvre successivement, séparées deux à deux par une étape respective d'affichage d'image(s) par la matrice d'éléments d'émission lumineuse (730).

12. Procédé selon l'une quelconque des revendications 8 à 11, **caractérisé en ce qu'**il comprend les étapes suivantes :
- acquisition d'une image au moins partielle de la rétine, à l'aide de la matrice de photo-détecteurs (760 ; 860) ; et
- traitement de ladite image à l'aide du calculateur (770), de manière à en déduire une information d'identification de l'utilisateur.

13. Procédé selon l'une quelconque des revendications 8 à 12, **caractérisé en ce qu'**il comprend les étapes suivantes:
- acquisition d'une ou plusieurs images au moins partielle de la rétine, à l'aide de la matrice de photo-détecteurs (760 ; 860) ; et
- traitement de la ou les plusieurs image(s) au moins partielle(s) de la rétine, à l'aide du calculateur (770), de manière à en déduire une information relative à un mouvement ou à une position de l'œil.

14. Procédé selon l'une quelconque des revendications 8 à 13, **caractérisé en ce qu'**il comprend les étapes suivantes :
- affichage d'au moins une image prédéterminée par la matrice d'éléments d'émission lumineuse (730), l'au moins une image prédéterminée comportant une pluralité de motifs répartis dans l'espace, et acquisition d'une série d'images au moins partielles de la rétine à l'aide de la matrice de photo-détecteurs (760 ; 860) ;
- traitement desdites images au moins partielles de la rétine, à l'aide du calculateur (770), de manière à en déduire une information relative à une suite de positions de l'œil, ou une suite de mouvements élémentaires de l'œil, et détermination d'un code d'authentification formulé par le mouvement de l'œil durant l'acquisition de la série d'images ; et
- comparaison avec des données d'authentification de manière à valider ou invalider une information d'identification de l'utilisateur.

15. Procédé selon l'une quelconque des revendications 8 à 14, **caractérisé en ce qu'**il comprend les étapes suivantes :
- ajustement de la focale du système optique de projection (840), pour le placer dans une position d'acquisition d'image de l'iris dans laquelle ce dernier participe à une conjugaison optique entre la matrice de photo-détecteurs (860) et l'iris de l'œil ;
- acquisition d'une image au moins partielle de l'iris, et traitement de cette dernière à l'aide du calculateur de manière à en déduire une information d'identification de l'utilisateur ;
- nouvel ajustement de la focale du système optique de projection (840), pour le placer dans une position d'acquisition d'image de la rétine dans laquelle ce dernier participe à une conjugaison optique entre la matrice de photo-détecteurs (860) et la rétine de l'oeil ; et
- affichage d'images par les matrices d'éléments d'émission lumineuse.

## Patentansprüche

1. Virtual-Reality- oder Augmented-Reality-Sichtsystem (700; 800), umfassend, in einem Träger, der dazu vorgesehen ist, auf dem Kopf eines Benutzers montiert zu werden:
- mindestens eine Matrix von Lichtemissionselementen (730), die sich entlang einer Anzeigeoberfläche (Sa) erstreckt und für die Anzeige von Bildern dediziert ist, die dazu vorgesehen sind, von dem Benutzer gesehen zu werden;
- mindestens ein optisches Projektionssystem (740; 840), das dazu fähig ist, ein Bild der Matrix von Lichtemissionselementen auf einer Fokussierungsoberfläche (250) in einem Abstand von einem Auge des Benutzers zu bilden;
wobei das Virtual-Reality- oder Augmented-Reality-Sichtsystem weiterhin umfasst:
- mindestens eine Matrix von Fotodetektoren (760; 860), die dazu eingerichtet sind, mindestens ein Bild einer Region des Auges zu erfassen, die sich entlang einer Aufnahmeoberfläche (Sc) erstreckt und die im Wesentlichen koplanar mit der Matrix von Lichtemissionselementen angeordnet ist, mit einer zumindest partiellen Überlappung zwischen der Aufnahmeoberfläche (Sc) und der Anzeigeoberfläche (Sa); und
- einen Rechner (770), der zum Empfangen von mindestens einem Bild, das von der Matrix von Fotodetektoren erfasst wurde, als Eingang und zum Durchführen einer Verarbeitung des mindestens einen Bilds, um davon einen oder mehrere Parameter (P) in Bezug auf den Benutzer abzuleiten, konfiguriert ist;
**dadurch gekennzeichnet, dass** das optische Projektionssystem (740; 840) ein optisches System mit variabler Brennweite ist, das mit einer Steuervorrichtung (741; 841) zur Steuerung seiner Brennweite verbunden ist.

2. System (700; 800) nach Anspruch 1, **dadurch gekennzeichnet, dass** die Matrix von Fotodetektoren (760; 860) und die Matrix von Lichtemissionselementen (730) jeweils in oder auf demselben Träger angeordnet sind.

3. System nach Anspruch 1 oder 2, **dadurch gekennzeichnet, dass** es weiterhin mindestens eine Beleuchtungsvorrichtung umfasst, die im Betrieb zum Emittieren eines Beleuchtungslichtbündels in Richtung des Auges konfiguriert ist, wobei die Beleuchtungsvorrichtung dazu fähig ist, bei Längen zu emittieren, die sich außerhalb des sichtbaren Spektrums befinden, und die Fotodetektoren der Matrix von Fotodetektoren für diese Wellenlängen empfindlich sind.

4. System (700) nach einem der Ansprüche 1 bis 3, **dadurch gekennzeichnet, dass**:
- das optische Projektionssystem (740) dazu fähig ist, eine Position zur Erfassung eines Bilds der Retina einzunehmen, wobei das optische Projektionssystem (740) im Betrieb an einer optischen Vereinigung zwischen der Matrix von Fotodetektoren (730) und der Retina des Auges teilnimmt; und
- der Rechner (770) zum Empfangen von mindestens einem Bild der Retina, das von der Matrix von Fotodetektoren erfasst wurde, als Eingang und zum Liefern eines Befehls zur Einstellung der Brennweite an die Steuervorrichtung (741) konfiguriert ist, wobei der Befehl bestimmt ist, um die Schärfe des Bilds der Retina zu erhöhen.

5. System (700; 800) nach einem der Ansprüche 1 bis 4, **dadurch gekennzeichnet, dass**:
- das optische Projektionssystem (740; 840) dazu fähig ist, eine Position zur Erfassung eines Bilds der Retina einzunehmen, wobei dieses letztere im Betrieb an einer optischen Vereinigung zwischen der Matrix von Fotodetektoren (760; 860) und der Retina des Auges teilnimmt; und
- der Rechner (770) zum Empfangen von mindestens einem Bild der Retina, das von der Matrix von Fotodetektoren erfasst wurde, als Eingang und zum Verarbeiten dieses Bilds, um eine Identifikationsinformation des Benutzers, eine Information in Bezug auf eine Bewegung des Auges oder eine Information in Bezug auf eine Position des Auges zu bestimmen, konfiguriert ist.

6. System (800) nach einem der Ansprüche 1 bis 5, **dadurch gekennzeichnet, dass**:
- das optische Projektionssystem (840) dazu fähig ist, mindestens zwei Positionen von einer Position zur Erfassung eines Bilds der Retina, wobei das optische Projektionssystem im Betrieb an einer optischen Vereinigung zwischen der Matrix von Fotodetektoren und der Retina des Auges teilnimmt, und einer Position zur Erfassung eines Bilds der Iris, wobei das optische Projektionssystem im Betrieb an einer optischen Vereinigung zwischen der Matrix von Fotodetektoren und der Iris des Auges teilnimmt, einzunehmen;
- die Steuervorrichtung (841) zum Einstellen der Brennweite des optischen Projektionssystems, um zu bewirken, dass dieses eine und dann die andere von der Position zur Erfassung eines Bilds der Iris und der Position zur Erfassung eines Bilds der Retina einnimmt; und
- der Rechner zum Empfangen von mindestens einem Bild einer Iris, das von der Matrix von Fotodetektoren erfasst wurde, als Eingang und zum Verarbeiten dieses Bilds, um eine Identifikationsinformation des Benutzers zu bestimmen, konfiguriert ist.

7. System nach einem der Ansprüche 1 bis 6, **dadurch gekennzeichnet, dass** es ein multifunktionales Mobiltelefon umfasst, und wobei:
- das multifunktionale Mobiltelefon einen Anzeigebildschirm umfasst, der die Matrix von Lichtemissionselementen, den Rechner und die Matrix von Fotodetektoren bildet; und
- der Träger, der dazu vorgesehen ist, auf dem Kopf eines Benutzers montiert zu werden, mit einem Gehäuse zum Aufnehmen des multifunktionalen Mobiltelefons ausgestattet ist und das optische Projektionssystem umfasst.

8. Verfahren zur Erfassung von Augenparametern, das mithilfe eines Systems (700; 800) nach einem der Ansprüche 1 bis 7 durchgeführt wird, das einen Schritt zur Positionierung des Trägers auf dem Kopf eines Benutzers umfasst, **dadurch gekennzeichnet, dass** es anschließend die folgenden Schritte umfasst:
- Erfassung von mindestens einem Bild einer Region eines Auges des Benutzers mithilfe der Matrix von Fotodetektoren (760), umfassend die Erfassung von einem zumindest partiellen Bild der Retina; und
- Verarbeitung des mindestens einen erfassten Bilds mithilfe des Rechners (770), um davon einen oder mehrere Parameter in Bezug auf das Auge des Benutzers abzuleiten, wobei die Verarbeitung die Berechnung eines Indikators, der die Schärfe des erfassten Bilds darstellt, die Formulierung eines Befehls zur Einstellung der Brennweite und die Übertragung dieses Befehls an die Steuervorrichtung (741) umfasst;
- mithilfe der Steuervorrichtung (741) Einstellung der Brennweite des optischen Projektionssystems (740) gemäß dem Befehl zur Einstellung der Brennweite;
wobei diese Schritte ein oder mehrere Male und bis zum Erhalt einer maximalen Schärfe des Bilds der Retina durchgeführt werden.

9. Verfahren nach Anspruch 8, **gekennzeichnet durch** einen Schritt zur Aufzeichnung von Daten zur Regulierung des optischen Projektionssystems (740; 840) in Verbindung mit einer Identifikationsinformation des Benutzers, wobei die Regulierungsdaten mit einem Brennweitenwert des optischen Projektionssystems verbunden sind, für den die Schärfe des Bilds der Retina maximal ist.

10. Verfahren nach Anspruch 8 oder 9, **dadurch gekennzeichnet, dass** es eine Vielzahl von Schritten zur Erfassung eines zumindest partiellen Bilds der Retina umfasst, die paarweise durch einen jeweiligen Schritt zur Anzeige eines oder mehrerer Bilder durch die Matrix von Lichtemissionselementen (730) getrennt sind.

11. Verfahren nach einem der Ansprüche 8 bis 10, **dadurch gekennzeichnet, dass**:
- die Erfassung eines zumindest partiellen Bilds der Retina mehrere grundlegende Schritte zur Signallesung umfasst, die jeweils zum Lesen eines Signals auf nur einem Teil der Fotodetektoren der Matrix von Fotodetektoren (760; 860) sind; und
- die grundlegenden Schritte zur Signallesung nacheinander durchgeführt werden, paarweise durch einen jeweiligen Schritt zur Anzeige eines oder mehrerer Bilder durch die Matrix von Lichtemissionselementen (730) getrennt.

12. Verfahren nach einem der Ansprüche 8 bis 11, **dadurch gekennzeichnet, dass** es die folgenden Schritte umfasst:
- Erfassung eines zumindest partiellen Bilds der Retina mithilfe der Matrix von Fotodetektoren (760; 860); und
- Verarbeitung des Bilds mithilfe des Rechners (770), um davon eine Identifikationsinformation des Benutzers abzuleiten.

13. Verfahren nach einem der Ansprüche 8 bis 12, **dadurch gekennzeichnet, dass** es die folgenden Schritte umfasst:
- Erfassung von einem oder mehreren zumindest partiellen Bildern der Retina mithilfe der Matrix von Fotodetektoren (760; 860); und
- Verarbeitung des oder der mehreren zumindest partiellen Bilder der Retina mithilfe des Rechners (770), um davon eine Information in Bezug auf eine Bewegung oder auf eine Position des Auges abzuleiten.

14. Verfahren nach einem der Ansprüche 8 bis 13, **dadurch gekennzeichnet, dass** es die folgenden Schritte umfasst:
- Anzeige von mindestens einem vorherbestimmten Bild durch die Matrix von Lichtemissionselementen (730), wobei das mindestens eine vorherbestimmte Bild eine Vielzahl von Motiven, die in einem Raum verteilt sind, umfasst, und Erfassung einer Reihe von zumindest partiellen Bildern der Retina mithilfe der Matrix von Fotodetektoren (760; 860);
- Verarbeitung der zumindest partiellen Bilder der Retina mithilfe des Rechners (770), um davon eine Information in Bezug auf eine Abfolge von Positionen des Auges oder eine Abfolge von grundlegenden Bewegungen des Auges abzuleiten, und Bestimmung eines Authentifizierungscodes, der durch die Bewegung des Auges während der Erfassung der Reihe von Bildern formuliert wird; und
- Vergleich mit Authentifizierungsdaten, um eine Identifikationsinformation des Benutzers für gültig zu erklären oder für ungültig zu erklären.

15. Verfahren nach einem der Ansprüche 8 bis 14, **dadurch gekennzeichnet, dass** es die folgenden Schritte umfasst:
- Einstellung der Brennweite des optischen Projektionssystems (840), um dieses in einer Position zur Erfassung eines Bilds der Iris zu platzieren, wobei das letztere an einer optischen Vereinigung zwischen der Matrix von Fotodetektoren (860) und der Iris des Auges teilnimmt;
- Erfassung eines zumindest partiellen Bilds der Iris und Verarbeitung dieses letzteren mithilfe des Rechners, um davon eine Identifikationsinformation des Benutzers abzuleiten;
- Neueinstellung der Brennweite des optischen Projektionssystems (840), um dieses in einer Position zur Erfassung eines Bilds der Retina zu platzieren, wobei das letztere an einer optischen Vereinigung zwischen der Matrix von Fotodetektoren (860) und der Retina des Auges teilnimmt; und
- Anzeige von Bildern durch die Matrizes von Lichtemissionselementen.

## Claims

1. System for vision in virtual reality or in augmented reality (700; 800) comprising, in a support intended to be mounted on the head of a user:
- at least one matrix of light-emission elements (730) which extends according to a display surface (Sa) and dedicated to the display of images intended to be seen by the user;
- at least one optical projection system (740; 840), capable of forming an image of the matrix of light-emission elements on a focusing surface (250) at a distance from an eye of the user;
the system for vision in virtual reality or in augmented reality further comprising:
- at least one matrix of photo-detectors (760; 860), adapted for acquiring at least one image of a region of the eye, which extends according to a capture surface (Sc) and which is arranged substantially coplanar with the matrix of light-emission elements, with an at least partial overlap between the capture surface (Sc) and the display surface (Sa); and
- a computer (770), configured to receive as an input the at least one image acquired by the matrix of photo-detectors, and to implement a processing of said at least one image in such a way as to deduce therefrom one or more parameters (P) relative to the user;
**characterised in that** the optical projection system (740; 840) is a variable-focal-length optical system, connected to a control device (741; 841) for the control of its focal length.

2. System (700; 800) according to claim 1, **characterised in that** the matrix of photo-detectors (760; 860) and the matrix of light-emission elements (730) are each arranged in or on the same substrate.

3. System according to claim 1 or 2, **characterised in that** it further comprises at least one illumination device configured to emit, during operation, an illumination light beam in the direction of the eye, the illumination device being capable of emitting at wavelengths located outside of the visible spectrum, and the photo-detectors of the matrix of photo-detectors being sensitive to these wavelengths.

4. System (700) according to any one of claims 1 to 3, **characterised in that**:
- the optical projection system (740) is capable of occupying a position for image acquisition of the retina, in which the optical projection system (740) participates, during operation, in an optical conjugation between the matrix of photo-detectors (730) and the retina of the eye; and
- the computer (770) is configured to receive as an input at least one image of the retina, acquired by the matrix of photo-detectors and to provide the control device (741) with a command for adjustment of focal length, said command being determined in such a way as to increase the sharpness of the image of the retina.

5. System (700; 800) according to any one of claims 1 to 4, **characterised in that**:
- the optical projection system (740; 840) is capable of occupying a position for image acquisition of the retina, in which said system participates, during operation, in an optical conjugation between the matrix of photo-detectors (760; 860) and the retina of the eye; and
- the computer (770) is configured to receive as an input at least one image of the retina acquired by the matrix of photo-detectors and to process this image in such a way as to determine a piece of information on identification of the user, a piece of information relative to a movement of the eye, or a piece of information relative to a position of the eye.

6. System (800) according to any one of claims 1 to 5, **characterised in that**:
- the optical projection system (840) is capable of occupying at least two positions out of a position for image acquisition of the retina, in which the optical projection system participates, during operation, in an optical conjugation between the matrix of photo-detectors and the retina of the eye, and a position for image acquisition of the iris, in which the optical projection system participates, during operation, in an optical conjugation between the matrix of photo-detectors and the iris of the eye;
- the control device (841) is configured to adjust the focal length of the optical projection system in such a way as to make it occupy one and then the other out of the position for image acquisition of the iris and the position for image acquisition of the retina; and
- the computer is configured to receive as an input at least one iris image acquired by the matrix of photo-detectors and to process this image in such a way as to determine a piece of information on identification of the user.

7. System according to any one of claims 1 to 6, **characterised in that** it comprises a multi-function smartphone, and wherein:
- the multi-function smartphone comprises a display screen forming the matrix of light-emission elements, the computer, and the matrix of photo-detectors; and
- the support intended to be mounted on the head of the user is provided with a housing in order to receive the multi-function smartphone and comprises the optical projection system.

8. Method for acquisition of parameters of the eye, implemented using a system (700; 800) according to any one of claims 1 to 7, which comprises a step of positioning the support on the head of a user, **characterised in that** it then comprises the following steps:
- acquisition of at least one image of a region of an eye of the user, using the matrix of photo-detectors (760), comprising the acquisition of an at least partial image of the retina; and
- processing of the at least one image acquired, using the computer (270; 770), in order to deduce therefrom one or more parameters relative to the eye of the user, said processing comprising the calculation of an indicator representative of the sharpness of the acquired image, formulation of a command for adjustment of focal length, and transmission of this command to the control device (741);
- using the control device (741), adjustment of the focal length of the optical projection system (740) according to said command for adjustment of focal length;
these steps being implemented one or more times, and until a maximum sharpness of the image of the retina is obtained.

9. Method according to claim 8, **characterised by** a step of recording data on adjustment of the optical projection system (740; 840), in association with a piece of information on identification of the user, said adjustment data being associated with a value of focal length of the optical projection system for which the sharpness of the image of the retina is maximal.

10. Method according to claim 8 or 9, **characterised in that** it comprises a plurality of steps of acquisition of an at least partial image of the retina, separated two by two by a respective step of display of image(s) by the matrix of light-emission elements (730).

11. Method according to any one of claims 8 to 10, **characterised in that**:
- the acquisition of an at least partial image of the retina comprises a plurality of elementary steps of signal reading, each for reading a signal on only a portion of the photo-detectors of the matrix of photo-detectors (760; 860); and
- the elementary steps of signal reading are implemented successively, separated two by two by a respective step of display of image(s) by the matrix of light-emission elements (730).

12. Method according to any one of claims 8 to 11, **characterised in that** it comprises the following steps:
- acquisition of an at least partial image of the retina, using the matrix of photo-detectors (760; 860); and
- processing of said image using the computer (770), in such a way as to deduce therefrom a piece of information on identification of the user.

13. Method according to any one of claims 8 to 12, **characterised in that** it comprises the following steps:
- acquisition of one or more at least partial images of the retina, using the matrix of photo-detectors (760; 860); and
- processing of the or the plurality of at least partial image(s) of the retina, using the computer (770), in such a way as to deduce therefrom a piece of information relative to a movement or to a position of the eye.

14. Method according to any one of claims 8 to 13, **characterised in that** it comprises the following steps:
- display of at least one predetermined image by the matrix of light-emission elements (730), the at least one predetermined image comprising a plurality of patterns distributed in the space, and acquisition of a series of at least partial images of the retina using the matrix of photo-detectors (760; 860);
- processing of said at least partial images of the retina, using the computer (770), in such a way as to deduce therefrom a piece of information relative to a series of positions of the eye, or a series of elementary movements of the eye, and determination of an authentication code formulated by the movement of the eye during the acquisition of the series of images; and
- comparison to authentication data in such a way as to validate or invalidate a piece of information on identification of the user.

15. Method according to any one of claims 8 to 14, **characterised in that** it comprises the following steps:
- adjustment of the focal length of the optical projection system (840), in order to place it in a position for image acquisition of the iris in which said system participates in an optical conjugation between the matrix of photo-detectors (860) and the iris of the eye;
- acquisition of an at least partial image of the iris, and processing of the latter using the computer in such a way as to deduce therefrom a piece of information on identification of the user;
- new adjustment of the focal length of the optical projection system (840), in order to place it in a position for image acquisition of the retina in which said system participates in an optical conjugation between the matrix of photo-detectors (860) and the retina of the eye; and
- display of images by the matrices of light-emission elements.
